# EUROPEAN PATENT SPECIFICATION

(11) **EP 2 878 186 B1**
(45) Date of publication and mention of the grant of the patent: **29.04.2020**
(21) Application number: 14192844.0
(22) Date of filing: 12.11.2014
(51) Int. Cl.: A01B 63/00

(54) **Agricultural implement, such as an extendable brush cutter, with improved safety for removable attachment to a tractor**
Landwirtschaftliches Arbeitsgerät, wie eine ausfahrbare Motorsense, mit verbesserter Sicherheit zur lösbaren Befestigung an einem Traktor
Outil agricole, tel qu'un coupe-broussailles extensible, avec une sécurité améliorée pour une fixation amovible à un tracteur

(30) Priority: 12.11.2013 IT PD20130305
(43) Date of publication of application: 03.06.2015
(73) Proprietor: Maschio Gaspardo S.p.A., 35011 Campodarsego (PD) (IT)
(72) Inventor: Maschio, Egidio, 35011 Campodarsego (PD) (IT)
(74) Representative: Cantaluppi, Stefano

(56) References cited:
- EP-A2- 1 004 230
- JP-A- 2002 285 587
- US-B1- 6 226 902

## Description

The present invention relates to an agricultural implement of the type intended for removable attachment to a tractor, for example an extendable brush cutter transported or towed by the tractor. In this context, the invention is mainly applicable to safety controls associated with a console for the operational control of the implement, these controls being designed to govern one or more operational functions of the implement, making consent to these functions dependent on the presence of an operator.

In order to improve the safety of some civil engineering machines, devices are provided to enable the use of one or more operational functions of the machine only when there is confirmation of the presence of an operator controlling the machine. In machines for the maintenance of grassy or wooded boundaries, for example road verges, ditches, cut hedges or the like, a consent sensor is generally provided under the operative seat, in such a way as to reveal his presence when he is seated in his position.

An example of these devices is described in DE102010034613 by Robert Bosch GmbH.

However, this requires the tractor to be specially provided with this sensor; in most cases, this provision is only made in tractors which are permanently equipped with extendable brush cutters and are therefore appropriately prepared. However, this is not the case in most conventional agricultural tractors, for which this arrangement is therefore unsuitable. An example of a typical case is that of a conventional agricultural tractor with which transported and towed implements are associated temporarily and removably.

An example of these implements, belonging to a technical field in which particular attention must be paid to safety problems, is that of extendable brush cutters, where the working tool is a cutting or mowing device which is made to rotate or is driven in any other way at high speed at the opposite end of the arm from the tractor.

The invention is also applicable to machines of various types, provided that they are controlled by an operator using a console which is transferable from and to an operative position of the tractor, where the term "operative position" is to be interpreted in the broadest sense as the position from which the operator monitors and controls the implement in its normal use. For implements transported by a tractor, or in any case removable therefrom, various types of consent sensors detecting the presence of the operator are used. An example of these sensors is that of a cushion (usually a pneumatic cushion) to be placed on the operator's seat and capable of actuating a sensor (such as a pressure switch) which provides consent to the operation of the equipment when the operator is seated thereon. An example of this solution is disclosed in US 6,226,902.

However, this device can be relatively easily circumvented, for example by tightly rolling up the cushion, so that consent situations may occur regardless of the presence of the operator in the cab.

Other devices require the use of mechanical, touch-operated or similar consent systems which must be actuated by the operator at the same time as the operational control that he wishes to execute. A typical example is that of armrest sensors in consoles with joystick control. However, these devices are unpleasant for the user, who is subject to unnecessary fatigue and/or unnatural positions, resulting in undesirable tiredness after a period of time.

Further examples of safety sensors for agricultural vehicles may be used in order to detect if an operator is sufficiently remote from the vehicle.

EP 1 004 230 discloses an agricultural vehicle having a remote control panel movable relative to the vehicle for enabling at least one of the functions of the vehicle to be controlled by an operator situated at a location remote from the vehicle. A docking station is provided in the vehicle cab to receive the remote control panel to allow the same control panel to be used by the operator form within the cab as well as from a remote location.

The problem on which the present invention is based is that of providing an agricultural implement for removable attachment to a tractor, such as an extendable brush cutter, which has improved intrinsic safety, and whose structure and operation are free of all the drawbacks mentioned in relation to the cited prior art.

This problem is resolved by the invention by means of an agricultural implement for removable attachment to a tractor, such as an extendable brush cutter, made in accordance with the appended claims.

The features and advantages of the invention will be made clearer by the following detailed description of a preferred example of embodiment thereof, illustrated, for the purposes of guidance and in a non-limiting way, with reference to the attached drawings, in which:

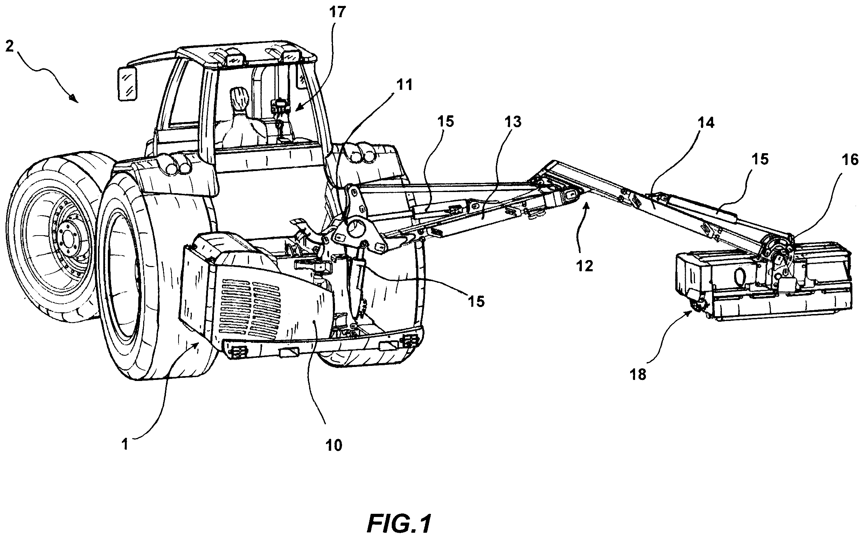

- Figure 1 is a schematic view of an agricultural implement according to the invention, associated with a tractor; and
- Figure 2 is an enlarged detail of Figure 1.

The figures show the whole of an extendable brush cutter 1, as an example of an agricultural implement, for removable attachment to a tractor 2.

The brush cutter 1 comprises a base unit 10 which is intended to be connected (generally at the rear) to the hydraulic lift of the tractor 2, and which contains, in a known way, a frame, hydraulic pumps and corresponding reservoirs, together with any necessary counterweights, the whole being integrated into a transported structure. An end 11 of an articulated arm 12 having two or more sections 13, 14 is pivoted on the base unit 10. One or both of the sections 13, 14 may also be extendable, using one more telescopic elongation systems, for example.

The movements of the sections 13, 14 of the arm 12 are governed by hydraulic actuators (of the jack type), all indicated by 15. A working tool, generally also hydraulically operated, is hinged at the opposite end 16 of the arm from the tractor 2, the tool being, for example, a cutting member 18, which may if necessary be interchangeable with a mower bar, a ditcher, or the like. In all cases, these are rather dangerous working tools, the operation of which must be supervised by an operator at all times.

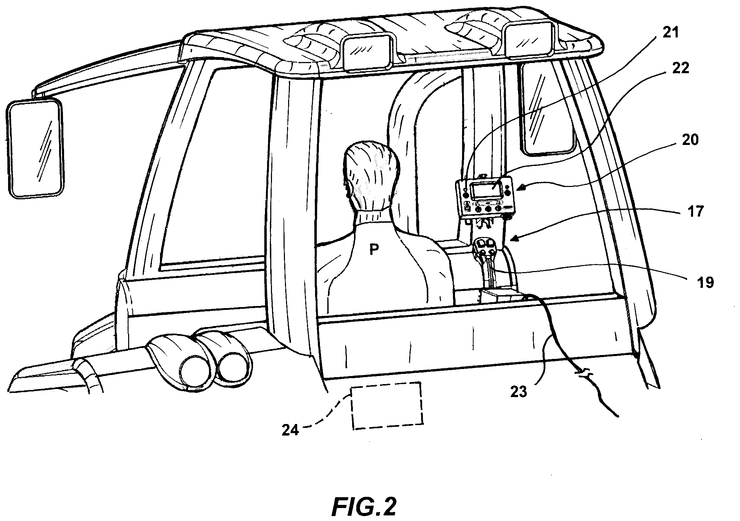

With reference to Figure 2, the operational control of the implement is provided by means of a console 17, which can be transferred from and to an operative position P of the tractor 2, generally the driver's cab of the tractor, for the remote control of the implement by an operator accommodated in the cab. It is necessary to be able to remove the console 17 from the cab, because the implement can be removed from the tractor 2, and the operational control console 17 must therefore be transferred when the implement is detached from the tractor 2. The console 17 may include conventional lever and/or joystick controls 19, interacting with the operating members of the brush cutter 1 to impart the commands required for the operation of the implement.

The console 17 is associated with a safety device 20 capable of generating an alarm signal in the absence of predetermined conditions of the operator's presence in the operative position P of the tractor 2. This alarm signal may include an absence of consent to one or more operational functions of the implement (for example, denial of consent to the actuation of the implement), an absence of consent to one or more operational functions of the tractor 2 itself (for example, the enabling of the operation of a power take-off), visual and/or audible alarms, or the placing of the machine in a safe state.

In the cited prior art, this safety device could include a sensor placed under the operator's seat, a cushion controlling a pneumatic sensor, or another system. According to the invention, on the other hand, it is proposed to use a contactless sensor for remote reading 21, associated with the console 17, for remotely reading the predetermined conditions of presence in the operative position P when the console 17 has been transferred to the operative position P.

Provision is made for the use of proximity sensors 21 (such as those used for constructing parking sensors in motor vehicles), or electromagnetic or ultrasonic sensors, volumetric or microwave sensors, or any appropriate combinations thereof (for example, combined sensors for anti-theft systems). The association with the console 17 provides for the sensor 21 (or sensors, should there be more than one) to be integrated into the console 17 itself so as to form a single unit with the latter.

In turn, the console 17 is connected to the base 10 of the brush cutter 1 by means of cables and conduits 23, or by a wireless link. Preferably, the console 17 is provided with a display 22 and the contactless sensor for remote readings 21 is placed beside this display 22. In this way the operator is encouraged to position the console 17 and the sensor 21 in full view, so that there is no obstruction in the space between the sensor 21 and the operator.

With the same purpose of avoiding and/or limiting the harmful effect of any obstruction, provision is made for the presence of the operator to be detected only within a predetermined range of distances, any excessively near or excessively distant measurements (relative to the position of the sensor 21) being rejected. Provision is also made for the consent provided via the contactless sensor for remote readings 21 to be considered valid only if there is at least one change in the operator's position within a predetermined time interval. This ensures that the reading of a fixed object by the sensor 21 will not affect the consent at the console 17.

Finally, provision is made for the contactless sensor for remote readings 21 to be interfaced directly with an operation control unit 24 which controls one or more operational functions of the tractor 2, for example the actuation of a power take-off, the release of brakes, or the like.

Thus the invention resolves the problem that was posed, while providing numerous advantages over the cited prior art, including the fact that safety controls can be provided on many different implements such as harrows, drills, sowers, sprayers, and others. The presence of the operator is verified in a simple, but effective way. The invention is also protected from interference and any false positives, particularly if the change of position of the operator over time is checked, or if the reading is made with the exclusion of presence readings outside a specified range of distances.

## Claims

1. An agricultural implement, such as an extendable brush cutter (1) or the like, for removable attachment to a tractor (2), comprising a console (17) for the operational control of the implement, the console (17) being transferable from and to an operative position (P) of the tractor (2) for the remote control of the implement by an operator accommodated in the operative position, and safety means (20) for generating an alarm signal in the absence of predetermined conditions of the presence of the operator in the operative position (P), **characterized in that** the safety means (20) comprise at least one contactless sensor for remote reading (21) integrated into the console (17) so as to form a single unit with the latter, for remotely reading the predetermined conditions of presence in the operative position (P) when the console (17) has been transferred to the operative position (P), wherein the operative position (P) is the position from which the operator monitors and controls the agricultural implement in its normal use and the at least one sensor (21) comprises at least one proximity sensor.

2. An agricultural implement according to Claim 1, wherein the at least one sensor is of the electromagnetic or ultrasonic type.

3. An agricultural implement according to Claim 1 or 2, wherein the at least one sensor comprises a volumetric sensor.

4. An agricultural implement according to any one or more of the preceding claims, wherein the at least one sensor is connected to the console (17) by a physical or wireless connection.

5. An agricultural implement according to any one or more of the preceding claims, wherein the at least one sensor is mounted on the console (17).

6. An agricultural implement according to any one or more of the preceding claims, wherein the at least one sensor is designed to exclude readings outside a predetermined spatial environment.

7. An agricultural implement according to any one or more of the preceding claims, wherein the at least one sensor is designed so that its consent is dependent on a spatial change in the positioning of the operator in the operative position (P) within a predetermined time interval.

8. An agricultural implement according to any one or more of the preceding claims, wherein the console (17) includes an operation control unit (24) of the tractor (2).

## Patentansprüche

1. Landwirtschaftliche Vorrichtung, wie z. B. eine ausziehbare Freischneideeinrichtung (1) oder dergleichen, zur entfernbaren Befestigung an einem Traktor (2), die eine Konsole (17) zur Betriebssteuerung der Vorrichtung, wobei die Konsole (17) von und zu einer Bedienungsposition (P) des Traktors (2) zur Fernsteuerung der Vorrichtung durch eine in der Bedienungsposition untergebrachten Bedienungsperson, und eine Sicherheitseinrichtung (20) zum Erzeugen eines Alarmsignals beim Fehlen vorbestimmter Bedingungen der Anwesenheit der Bedienungsperson in der Bedienungsposition (P) umfasst, **dadurch gekennzeichnet, dass** die Sicherheitseinrichtung (20) zumindest einen berührungslosen Sensor zur Fernerfassung (21) umfasst, der in die Konsole (17) integriert ist, um mit dieser eine einzige Einheit zum Fernerfassen der vorbestimmten Anwesenheitsbedingungen in der Bedienungsposition (P) zu bilden, wenn die Konsole (17) in die Bedienungsposition (P) versetzt wurde, wobei die Bedienungsposition (P) die Position ist, von der aus der Bediener die landwirtschaftliche Vorrichtung bei deren normaler Verwendung überwacht und steuert, und der zumindest eine Sensor (21) zumindest einen Näherungssensor umfasst.

2. Landwirtschaftliche Vorrichtung nach Anspruch 1, wobei der zumindest eine Sensor der eines elektromagnetischen oder Ultraschalltyps ist.

3. Landwirtschaftliche Vorrichtung nach Anspruch 1 oder 2, wobei der zumindest eine Sensor einen volumetrischen Sensor umfasst.

4. Landwirtschaftliche Vorrichtung nach einem oder mehreren der vorhergehenden Ansprüche, wobei der zumindest eine Sensor mittels einer physischen oder drahtlosen Verbindung mit der Konsole (17) verbunden ist.

5. Landwirtschaftliche Vorrichtung nach einem oder mehreren der vorhergehenden Ansprüche, wobei der zumindest eine Sensor an der Konsole (17) montiert ist.

6. Landwirtschaftliche Vorrichtung nach einem oder mehreren der vorhergehenden Ansprüche, wobei der zumindest eine Sensor so ausgelegt ist, dass dieser Erfassungen außerhalb einer vorbestimmten räumlichen Umgebung ausschließt.

7. Landwirtschaftliche Vorrichtung nach einem oder mehreren der vorhergehenden Ansprüche, wobei der zumindest eine Sensor so ausgelegt ist, dass dessen Zustimmung von einer räumlichen Änderung der Position des Bedieners in der Betriebsposition (P) innerhalb eines vorbestimmten Zeitintervalls abhängt.

8. Landwirtschaftliche Vorrichtung nach einem oder mehreren der vorhergehenden Ansprüche, wobei die Konsole (17) eine Betriebssteuereinheit (24) des Traktors (2) umfasst.

## Revendications

1. Outil agricole, tel qu'un coupe-broussailles extensible (1) ou l'équivalent, pour une fixation amovible à un tracteur (2), comprenant une console (17) pour la commande opérationnelle de l'outil, la console (17) étant transférable depuis et jusqu'à une position opératoire (P) du tracteur (2) pour la commande à distance de l'outil par un opérateur placé dans la position opératoire, et un moyen de sécurité (20) pour générer un signal d'alarme en l'absence de conditions prédéterminées de la présence de l'opérateur dans la position opératoire (P), **caractérisé en ce que** le moyen de sécurité (20) comprend au moins un capteur sans contact pour lecture à distance (21) intégré dans la console (17) de façon à former une seule unité avec cette dernière, pour lire à distance les conditions prédéterminées de présence dans la position opératoire (P) lorsque la console (17) a été transférée jusqu'à la position opératoire (P), dans lequel la position opératoire (P) est la position à partir de laquelle l'opérateur surveille et commande l'outil agricole dans son usage normal et l'au moins un capteur (21) comprend au moins un capteur de proximité.

2. Outil agricole selon la revendication 1, dans lequel l'au moins un capteur est du type électromagnétique ou à ultrasons.

3. Outil agricole selon la revendication 1 ou 2, dans lequel l'au moins un capteur comprend un capteur volumétrique.

4. Outil agricole selon l'une quelconque ou plus des revendications précédentes, dans lequel l'au moins un capteur est connecté à la console (17) par une connexion physique ou sans fil.

5. Outil agricole selon l'une quelconque ou plus des revendications précédentes, dans lequel l'au moins un capteur est monté sur la console (17).

6. Outil agricole selon l'une quelconque ou plus des revendications précédentes, dans lequel l'au moins un capteur est conçu pour exclure les lectures hors d'un environnement spatial prédéterminé.

7. Outil agricole selon l'une quelconque ou plus des revendications précédentes, dans lequel l'au moins un capteur est conçu de façon que son consentement dépende d'un changement spatial du positionnement de l'opérateur dans la position opératoire (P) dans un intervalle de temps prédéterminé.

8. Outil agricole selon l'une quelconque ou plus des revendications précédentes, dans lequel la console (17) inclut une unité de commande de fonctionnement (24) du tracteur (2).
